# EUROPÄISCHE PATENTANMELDUNG

(11) **EP 2 283 726 A1**
(43) Veröffentlichungstag der Anmeldung: **16.02.2011**
(21) Anmeldenummer: 10008038.1
(22) Anmeldetag: 02.08.2010
(51) Int. Cl.: A01M 23/08, A01M 31/00

(54) **Kleintierfalle**

(30) Priorität: 11.08.2009 DE 102009036910
(71) Anmelder: BSC Computer GmbH, 35108 Allendorf/Eder (DE)
(72) Erfinder: Engel, Wolfgang, 35088 Battenberg/Eder (DE); Hofmann, Jörg, 59969 Bromskirchen (DE); Truß, Gerd, 35108 Allendorf (DE)
(74) Vertreter: Buchhold, Jürgen

(57) **Zusammenfassung**

Falle, im Speziellen eine Kleintierfalle, die eine Auslöseeinrichtung und einen Sender zum Senden eines Auslösesignals aufweist, wobei sie einen Energiewandler zum Umwandeln mechanischer Energie in elektrische Energie aufweist. Ein mechanisches Schnappelement ist zudem zwischen Auslöseeinrichtung und Energiewandler angeordnet. Weiterhin weist die Falle einen mechanischen Energiespeicher und eine Vorspanneinrichtung auf, die durch Betätigung der Auslöseeinrichtung lösbar ist, wodurch mechanische Energie aus dem Energiespeicher auf den Energiewandler übertragbar ist.

## Beschreibung

Die Erfindung betrifft eine Falle, insbesondere eine Kleintierfalle, die eine Auslöseeinrichtung und einen Sender zum Senden eines Auslösesignals aufweist.

Eine derartige Falle ist aus DE 20 2004 013 928 U1 bekannt. Dabei wird die Falle in einer Anlage zur Abwehr von Kleintieren in einem zu schützenden Areal aufgestellt. Die Falle ist dabei als Lebendfalle ausgebildet. Wenn ein Tier in die Falle gelangt, wird das über einen Sensor erfasst. Mit Hilfe einer Sendereinheit wird ein Signal des Sensors an eine Zentrale übermittelt. Zur Stromversorgung ist der Sender mit einer kleinen Batterie versehen.

Derartige Fallen dienen zur Abwehr von Kleintieren, beispielsweise von Mäusen und anderen Nagetieren. Kleintiere stellen insbesondere im Bereich der Lebensmittelindustrie ein Problem dar. Der Einsatz von Gift zur Abwehr der Tiere ist dabei in der Regel unerwünscht, da zum einen die Gefahr besteht, dass Lebensmittel mit den Giftstoffen in Berührung kommen und zum anderen von verendeten Tieren eine Kontaminationsgefahr ausgeht. Dabei verenden die Tiere häufig an schwierig zugänglichen Stellen, was die Einhaltung der Hygieneanforderungen erschwert.

Insbesondere bei Lebendfallen, aber auch bei Fallen, bei denen die Tiere getötet werden, ist eine regelmäßige Überwachung der Fallen erforderlich, um feststellen zu können, ob ein Tier gefangen wurde. Mit dem in DE 20 2004 013 928 U1 offenbarten System ist es nun möglich, die Fallen von einer zentralen Stelle aus zu überwachen, so dass der Überwachungsaufwand verringert wird. Allerdings ist die Energieversorgung der Fallen problematisch. Bei den als Energiequelle vorgeschlagenen Batterien besteht das Problem, dass der Ladezustand nicht eindeutig bestimmbar ist. Insbesondere bei wechselnden Temperaturen kann es dann zu einem vorzeitigen Versagen der Sendereinheit führen.

Der Erfindung liegt nun die Aufgabe zugrunde, eine Falle bereitzustellen, bei der die Betriebssicherheit erhöht ist.

Erfindungsgemäß wird diese Aufgabe bei einer Falle der eingangs genannten Art dadurch gelöst, dass sie einen Energiewandler zum Umwandeln mechanischer Energie in elektrische Energie aufweist.

Die Falle stellt also eine völlig autarke Einheit dar, die keine zusätzliche Energieversorgung benötigt. Die zum Senden eines Auslösesignals erforderliche elektrische Energie wird dabei aus mechanischer Energie gewonnen, die z.B. durch die Bewegung des gefangenen Tieres erhalten wird. Dabei hat sich herausgestellt, dass selbst bei Kleintieren, die nur eine geringe Masse aufweisen, eine ausreichende elektrische Energie gewonnen werden kann. Als Energiewandler kann beispielsweise ein Generator eingesetzt werden. Möglich ist auch, ein oder mehrere Piezoelemente oder elektrodynamische Generatoren als Energiewandler zu verwenden. Durch derartige Energiewandler wird eine mechanische, in der Regel kinetische Energie in eine elektrische Energie umgewandelt, die den Sender mit der benötigten elektrischen Energie zum Senden des Auslösesignals an eine zentrale Erfassungseinheit versorgt. Der Wartungsaufwand der Fallen wird damit auf ein Minimum reduziert und die Betriebssicherheit weiter erhöht, da ein Ausfall wegen fehlender elektrischer Energie ausgeschlossen ist.

Vorteilhafterweise weist die Falle ein mechanisches Schnappelement auf, das zwischen Auslöseeinrichtung und Energiewandler angeordnet ist. Das Schnappelement ist beispielsweise als Blattfeder ausgebildet. Das Schnappelement kann zum Beispiel dafür sorgen, dass die Auslöseeinrichtung bei Überschreiten einer definierten Auslösekraft schlagartig nachgibt. Dadurch erfolgt eine entsprechende Anregung des Energiewandlers, der dann elektrische Energie in Form eines Spannungsimpulses zur Verfügung stellt, der dann zum Senden eines Auslösesignals dient. Auch wenn durch das gefangene Tier nur eine geringe Energie in das System eingebracht wird, ist damit ein sicheres Auslösen und Senden gewährleistet. Die Auslöseeinrichtung kann dann so eingestellt werden, dass sie bereits bei geringen Kräften auslöst, wobei die mechanische Energie des Auslösens dann durch das Schnappelement "verstärkt" wird und dem Energiewandler zugeleitet wird.

Dabei ist besonders bevorzugt, dass die Falle einen mechanischen Energiespeicher, insbesondere eine Feder, und eine Vorspanneinrichtung aufweist. In dem Energiespeicher kann in der Regel potentielle Energie gespeichert werden. Eine Feder stellt eine besonders einfache Ausbildung eines derartigen Energiespeichers dar. Die Feder kann über eine Vorspanneinrichtung durch einen Bediener vorgespannt werden, wobei dies den Vorteil hat, dass die Energie auch über einen relativ langen Zeitraum nahezu verlustfrei gespeichert ist. Das Spannen der Feder mit Hilfe der Vorspanneinrichtung und damit ein Laden des Energiespeichers kann dabei beim Bestücken der Falle erfolgen, wodurch keine zusätzliche Wartungsarbeit anfällt.

Vorzugsweise ist die Vorspanneinrichtung durch Betätigung der Auslöseeinrichtung lösbar, wodurch mechanische Energie aus dem Energiespeicher auf den Energiewandler übertragbar ist. Dies kann dabei sogar so weit gehen, dass nur die mechanische Energie aus dem Energiespeicher im Energiewandler in elektrische Energie umgewandelt wird, während die mechanische Energie des gefangenen Tieres zum Betätigen der Auslöseeinrichtung und damit zum Lösen der Vorspanneinrichtung dient. Durch entsprechende Auslegung des Energiespeichers kann damit sichergestellt werden, dass immer ausreichend mechanische Energie zum Energiewandler gelangt. Damit wird sichergestellt, dass auch bei sehr kleinen Tieren ein Signal gesendet werden kann.

In einem bevorzugten Ausführungsbeispiel weist die Auslöseeinrichtung einen Schlagarm auf, wobei durch Vorspannen des Schlagarms die Vorspanneinrichtung spannbar ist. Fallen mit Schlagarm stellen die übliche Form einer Mausefalle dar, wobei die Maus durch den Schlagarm getroffen wird. Das Spannen des Schlagarms erfolgt dabei manuell. Dabei wird in der Regel der Schlagarm gegen eine Federkraft vorgespannt. Wenn nun gleichzeitig die Vorspanneinrichtung vorgespannt wird, beispielsweise durch eine mechanische Verbindung zwischen Schlagarm und Vorspanneinrichtung, erfolgt mit dem Scharfmachen der Falle gleichzeitig eine Aktivierung der Vorspanneinrichtung und damit ein Laden des mechanischen Energiespeichers, so dass ein sicheres Senden des Auslösesignals gewährleistet ist.

Vorzugsweise ist die Auslöseeinrichtung schwenkbar an einem Korpus befestigt, in dem der Energiewandler angeordnet ist. Der Energiewandler und die Auslöseeinrichtung sind also mechanisch miteinander verbunden. Dabei kann die Auslöseeinrichtung mit dem Energiewandler mit relativ wenig Bauraum auskommen. Gleichzeitig sind Übertragungswege zwischen der Auslöseeinrichtung und dem Energiewandler kurz, so dass die Gefahr von Störungen minimiert wird.

Dabei ist besonders bevorzugt, dass die Auslöseeinrichtung einen Stößel aufweist, der durch eine Öffnung im Korpus mit dem Energiewandler verbunden ist. Verbunden bedeutet in diesem Zusammenhang nicht unbedingt, dass der Stößel direkt mit dem Energiewandler verbunden ist, sondern es ist auch eine indirekte Verbindung möglich. Der Energiewandler selbst kann dann relativ geschützt im Korpus angeordnet sein, wobei der Korpus nur eine relativ kleine Öffnung für den Stößel aufweisen muss. Der Energiewandler ist dann vor Umwelteinflüssen gut geschützt. Gleichzeitig ist der Energiewandler räumlich benachbart zum Energiespeicher angeordnet, so dass kurze Übertragungswege vorliegen. Damit wird eine kompakte, leicht handhabbare Einheit erhalten.

In einem bevorzugten Ausführungsbeispiel weist die Auslöseeinrichtung ein Pendel oder eine Klappe auf. Das Pendel kann beispielsweise an einer Decke der Falle aufgehängt sein, wenn diese als Lebendfalle ausgebildet ist. Bei einer Anordnung eines Köders unterhalb des Pendels wird das Pendel durch das Tier ausgelenkt, das zum Köder gelangen möchte. Dabei kann eine entsprechende Übersetzung vorgesehen sein, so dass auch bei einer geringen Auslenkkraft, die auch von kleinen Tieren aufbringbar ist, eine ausreichende Kraft übertragen wird, so dass die Vorspanneinrichtung bei einer Auslenkung des Pendels aus seiner Ruhelage sicher lösbar ist. Gegebenfalls kann das Pendel auch durch Federn in seiner Ruhelage gehalten werden, so dass die Gefahr von Fehlauslösungen beispielsweise beim Transport der Falle verringert wird.

In einer weiteren bevorzugten Ausführungsform weist die Auslöseeinrichtung ein Trittbrett auf, das an einem Ende schwenkbar am Korpus gelagert ist. Ein Trittbrett stellt eine relativ einfache Lösung dar, wobei das Gewicht des Tieres zum Auslösen ausgenutzt wird. Gegebenfalls ist es dabei möglich, eine relativ große Schwenkbewegung des Trittbretts vorzusehen, so dass relativ viel mechanische Energie auch bei einem leichten Tier bereitgestellt wird. Ein Köder wird dann in der Regel auf dem Trittbrett angeordnet.

Dabei ist besonders bevorzugt, dass an einer Schwenkachse des Trittbretts eine Druckscheibe angeordnet ist. Die Druckscheibe stellt ein einfach aufgebautes Getriebe dar, das zu einer Übersetzung der Bewegung des Trittbretts dient. Die Bewegung des Trittbretts kann dann leicht übertragen werden, um beispielsweise die Vorspanneinrichtung zu lösen, so dass die im Energiespeicher gespeicherte potentielle Energie zum Energiewandler übertragen wird, der diese mechanische Energie in entsprechende elektrische Energie umwandelt, die dann zum Sender über eine elektrische Leitung geleitet wird, so dass dieser ein Auslösesignal sendet.

Dabei ist besonders bevorzugt, dass das Trittbrett eine Seite des Korpus zumindest teilweise überdeckt. Dadurch kann auch bei beengten Raumverhältnissen ein relativ langes Trittbrett verwendet werden, wodurch günstige Hebelverhältnisse erhalten werden. Gleichzeitig dient das Trittbrett dazu, den Korpus vor Umwelteinflüssen zu schützen. Das Trittbrett kann dabei gegebenenfalls dachartig ausgebildet sein und dann nicht nur eine obere Seite des Korpus überdecken, sondern auch einen Teil der Seitenflächen. Gegebenenfalls kann ein Ende des Trittbretts auch gabelförmig ausgebildet sein, wobei diese gabelförmige Ausbildung dazu dient, den Korpus seitlich zu umfassen, so dass für die Lagerung des Trittbretts relativ kurze Achsen ausreichend sind.

Vorteilhafterweise weist die Auslöseeinrichtung eine Kalibriervorrichtung auf. Die Kalibriervorrichtung kann beispielsweise durch ein verschiebbar angeordnetes Gewicht ausgebildet sein. Je nach Abstand von einem Drehpunkt, beispielsweise von der Schwenkachse des Trittbretts, ist dann für ein Auslösen der Auslöseeinrichtung eine unterschiedliche Kraft erforderlich. Dadurch kann die Falle an die Größe der zu fangenden Tiere angepasst werden.

In einem bevorzugten Ausführungsbeispiel weist die Falle ein Gehäuse auf, wobei die Auslöseeinrichtung innerhalb des Gehäuses und der Sender außerhalb des Gehäuses angeordnet sind. Die Falle ist also als Lebendfalle ausgebildet. Der Energiewandler kann ebenfalls außerhalb des Gehäuses angeordnet sein. Dabei ermöglicht die Anordnung des Senders außerhalb des Gehäuses, bei einer relativ geringen Sendeleistung zu senden, da der Sender nicht vom Gehäuse abgeschirmt wird. Die Reichweite wird dadurch erhöht.

Dabei ist besonders bevorzugt, dass der Korpus einen Befestigungsabschnitt für den Sender aufweist, wobei der Befestigungsabschnitt durch eine Wand des Gehäuses geführt ist. Der Befestigungsabschnitt kann dabei einstückig mit dem Korpus ausgebildet sein. Der Befestigungsabschnitt dient dann zum einen dazu, den Korpus und damit die Auslöseeinrichtung mit dem Energiewandler innerhalb des Gehäuses festzulegen und gleichzeitig dazu, den Sender zu befestigen. Der Befestigungsabschnitt kann dabei beispielsweise mittels Presspassung in der Wand des Gehäuses gehalten sein. Der Sender kann mit Hilfe einer Schnellverschlusseinrichtung, beispielsweise einem Bajonettverschluss mit dem Befestigungsabschnitt verbunden sein.

Dabei ist besonders bevorzugt, dass in den Befestigungsabschnitt elektrische Kontakte integriert sind. Durch Befestigen des Senders am Befestigungsabschnitt wird also gleichzeitig ein elektrischer Kontakt zwischen dem Sender und dem Energiewandler hergestellt. Freiliegende Leitungen, die insbesondere von Nagetieren häufig beschädigt werden, liegen dann nicht vor. Alle empfindlichen Elemente, wie beispielsweise der Energiewandler, sind vielmehr vor den Tieren geschützt im Korpus angeordnet.

Vorzugsweise ruht die Druckscheibe mit einem Nocken in Umfangsrichtung auf der Blattfeder des Energiewandlers, wobei das Trittbrett bei Belastung durch das Eigengewicht eines Tieres, insbesondere eines Kleintieres, schlagartig nachgibt, so dass dadurch am vorzugsweise elektrodynamisch wirkenden Energiewandler ein Spannungsimpuls induziert wird, der zur Abstrahlung eines Funktelegramms verwertet wird. Damit erfolgt also ein automatisches Senden des Auslösesignals.

Die Erfindung wird im Folgenden anhand bevorzugter Ausführungsbeispiele in Verbindung mit der Zeichnung beschrieben. Hierin zeigen:
- Fig. 1: eine als Lebendfalle ausgebildete Falle ohne Energiespeicher,
- Fig. 2: eine Detailansicht der Auslöseeinrichtung mit Energiewandler samt Sender im selben Korpus außerhalb des Gehäuses,
- Fig. 3: eine Rückansicht zu Fig. 2,
- Fig. 4: eine bevorzugte Ausführungsform einer Auslöseeinrichtung in einer als Lebendfalle ausgebildeten Falle mit Trittbrett samt Energiewandler innerhalb und Sender außerhalb des Fallengehäuses,
- Fig. 5: einen Korpus zur Aufnahme des Energiewandlers,
- Fig. 6: die Auslöseeinrichtung mit Sender, Trittbrett und Wandlerkorpus,
- Fig. 7: ein Trittbrett von unten,
- Fig. 8: eine weitere bevorzugte Ausführungsform der Falle mit Energiespeicher im entspannten Zustand,
- Fig. 9: die Falle nach Fig. 8 im gespannten Zustand,
- Fig. 10: ein Funktionsschema mit Energiespeicher und
- Fig. 11: ein Pendel der Auslöseeinrichtung ohne Energiespeicher.

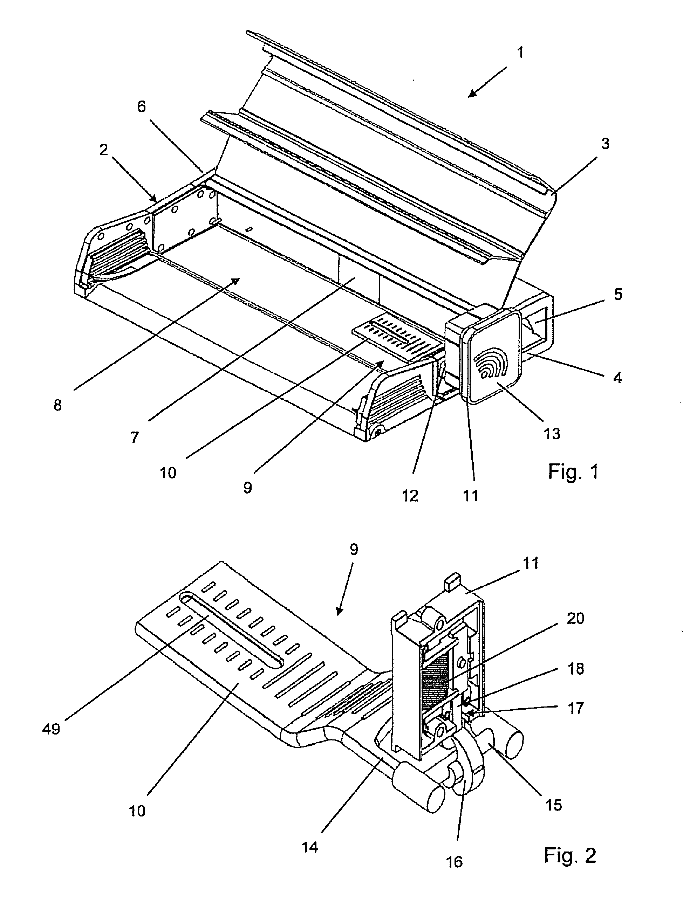

In Fig. 1 ist in räumlicher Darstellung eine Falle 1 dargestellt, die als Lebendfalle für Kleintiere ausgebildet ist. Kleintiere sind beispielsweise Mäuse oder andere kleine Nagetiere. Die Falle 1 weist ein Gehäuse 2 auf, das mit einem aufklappbaren Deckel 3 versehen ist. In der gezeigten Darstellung ist der Deckel 3 aufgeklappt. In einer Seitenwand 4 ist ein Eingang 5 für das zu fangende Tier angeordnet. In einer der Seitenwand 4 gegenüberliegenden Seitenwand 6 befindet sich ein entsprechender Eingang. Die Tiere gelangen durch eine nicht dargestellte, nur einseitig öffnende Klappe und eine Öffnung 7 in einen Innenraum 8 der Falle 1, wobei ein Entkommen aus der Falle 1 bei geschlossenem Deckel 3 durch die Klappe verhindert wird.

Im Innenraum 8 der Falle 1 ist eine Auslöseeinrichtung 9 mit einem Trittbrett 10 angeordnet. Das Trittbrett 10 ist dabei durch die Seitenwand 4 hindurch an einem extern angeordneten Korpus 11 gelagert, der einen Energiewandler 20 samt Funksender 13 umgibt. Dabei ist der Korpus 11 mit Hilfe eines Befestigungsabschnitts 12 in der Seitenwand 4 gehalten. Außerhalb der Falle 1 ist am Befestigungsabschnitt 12, der die Seitenwand 4 durchsetzt, der Sender 13 zum Senden eines Auslösesignals angeordnet und mit dem Energiewandler elektrisch und mechanisch als Vormontagebaugruppe verbunden. Der Befestigungsabschnitt 12 ist dabei mittels Presspassung in der Wand 4 gehalten. Andere Verbindungsarten sind aber denkbar.

Zum sicheren Auslösen der Auslöseeinrichtung 9, wofür es erforderlich ist, dass ein Tier auf das Trittbrett 10 tritt oder sich vollständig auf das Trittbrett 10 bewegt, wird ein Köder oder ein synthetischer Lockstoff auf dem Trittbrett 10 angeordnet. Durch das Gewicht des Tieres wird dann das Trittbrett 10 nach unten bewegt, wobei die dabei frei werdende mechanische Energie im Energiewandler 20 in elektrische Energie umgewandelt wird, die zur Versorgung des Senders 13 ausreicht, so dass ein Auslösesignal vom Sender 13 an eine Zentrale übermittelt werden kann. Eine zusätzliche elektrische Energiequelle ist dafür nicht erforderlich.

In Fig. 2 ist die Auslöseeinrichtung 9 vereinzelt dargestellt. Das Trittbrett 10 ist an einem Ende 14 gabelförmig ausgebildet und an dem Ende 14 über eine Schwenkachse 15 schwenkbar mit dem Korpus 11 verbunden. Dabei wird eine Schwenkbewegung des Trittbretts 10 über eine Druckscheibe 16, die an der Schwenkachse 15 befestigt ist, auf eine Vorspanneinrichtung 17 übertragen, die im Korpus 11 angeordnet ist. Die Vorspanneinrichtung 17 weist eine Feder 18, die bei diesem Beispiel als Blattfeder ausgebildet ist, und einen Spannstift 19 auf, der manuell betätigbar ist. Durch Auslösen des Trittbretts 10 wird die Vorspanneinrichtung 17 gelöst, so dass die in der gespannten Feder 18 gespeicherte mechanische Energie zum Energiewandler 20 übertragen wird. Der Energiewandler 20 ist bei diesem Ausführungsbeispiel als Generator ausgebildet. Die elektrische Energie ist am Energiewandler 20 in Form von Spannung bzw. Strom abgreifbar und wird über Leitungen an den Sender 13 übermittelt. Dieser sendet dann automatisch ein Auslösesignal. Im Trittbrett 10 ist eine Kalibriervorrichtung 49 in Form eines Schlitzes vorgesehen. In dem Schlitz kann ein Gewicht verschiebbar geführt sein, wodurch eine minimale Masse, die ein Tier zur Betätigung der Auslöseeinrichtung aufweisen muss, festgelegt wird.

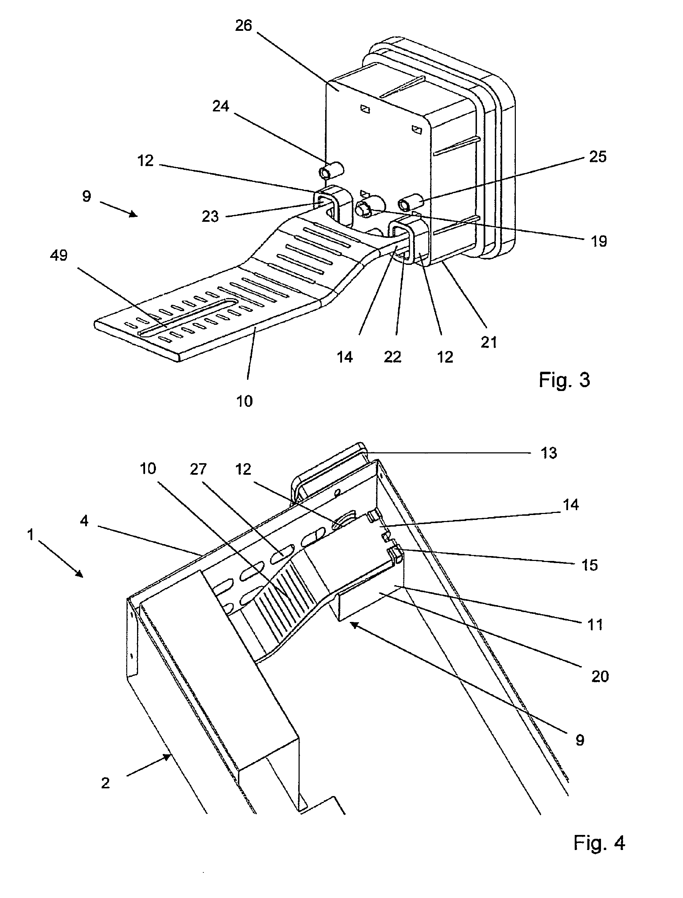

Fig. 3 zeigt die Rückansicht der in Fig. 2 dargestellten Auslöseeinrichtung. Dabei ist der Korpus 11 mit einem zusätzlichen Schutzgehäuse 21 umgeben, wobei das gabelförmige Ende 14 durch zwei Öffnungen 22, 23 in das Schutzgehäuse 21 eingeführt ist. Zu erkennen ist dabei auch der Spannstift 19, der manuell von der Seite betätigbar ist, an der sich auch das Trittbrett befindet. Es ist in Fig. 1-3 dargestellt, dass das Schutzgehäuse 21 außerhalb des Gehäuses 2 der Falle 1 angeordnet wird, wobei zusätzlich zu den Befestigungsabschnitten 12, die im Bereich der Öffnungen 22, 23 angeordnet sind, noch weitere Befestigungspunkte 24, 25 vorgesehen sind. Der Spannstift 19 ist dann auch bis in den Innenraum 8 der Falle 1 geführt, während die Seitenwand der Falle an einer glatten Rückwand 26 des Schutzgehäuses 21 anliegt.

In Fig. 4 ist eine weitere mögliche Ausbildung der erfindungsgemäßen Falle 1 dargestellt. Dabei ist das Trittbrett 10 am Korpus 11 schwenkbar befestigt, wobei der Korpus 11 im Innenraum 8 der Falle 1 angeordnet ist. Dabei wird eine Oberseite des Korpus 11 vom Trittbrett 10 vollständig abgedeckt. In der Seitenwand 4 sind Belüftungsöffnungen 27 vorgesehen, die jedoch so klein sind, dass ein zu fangendes Tier dadurch nicht entkommen kann.

Während der Energiewandler 20 innerhalb des Korpus 11 und damit innerhalb der Falle 1 angeordnet ist, befindet sich der Sender 13 außerhalb des Gehäuses. Der Befestigungsabschnitt 12 durchsetzt dabei die Seitenwand 4. Damit wird zum einen der Korpus 11 und damit die Auslöseeinrichtung 9 innerhalb des Innenraums 8 der Falle 1 gehalten und zum anderen der Sender 13 außerhalb der Falle 1 befestigt. Gleichzeitig wird durch den Befestigungsabschnitt 12 eine elektrische Verbindung zwischen dem Energiewandler 20 und dem Sender 13 hergestellt. Es gibt also keine freien Leitungen, die durch Nagetiere beschädigt werden könnten.

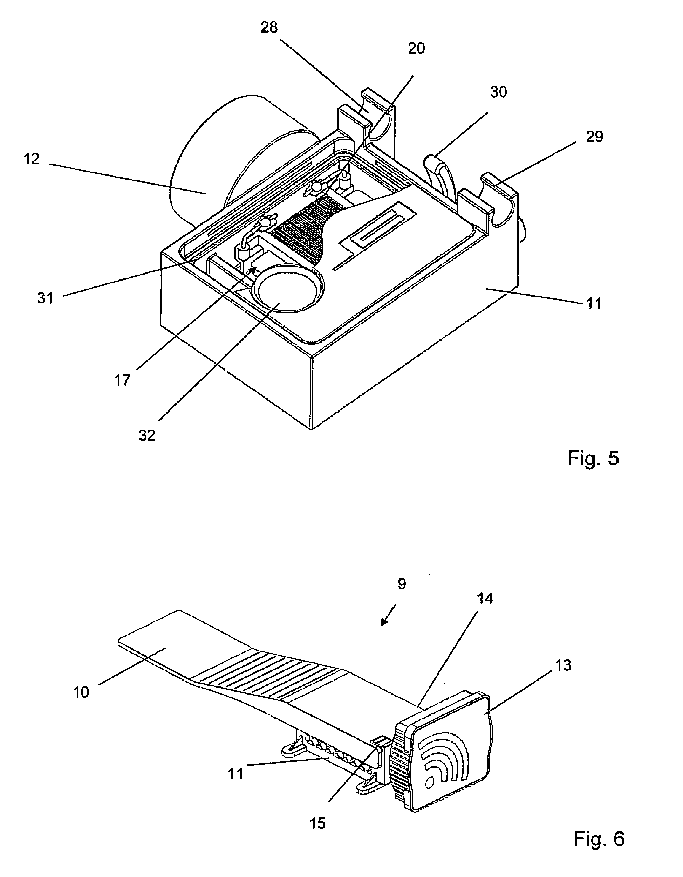

In Fig. 5 ist eine Detailansicht des Korpus 11 dargestellt, wobei der Korpus 11 aus einem durchsichtigen Material gebildet ist. Natürlich kann der Korpus 11 auch aus jedem anderen beliebigen, undurchsichtigen Material gebildet sein, wobei das durchsichtige Material bei diesem Beispiel nur der Anschaulichkeit halber verwendet ist. Der Korpus 11 weist zwei Aufnahmen 28, 29 auf, in denen das Trittbrett 10 schwenkbar gelagert werden kann. Das Trittbrett 10 ist bei diesem Beispiel entfernt. Ein-doppelarmiger Hebel 30 dient dazu, das Trittbrett 10 in seine Ruhelage zurückzubewegen, wenn das Trittbrett 10 durch ein Tier ausgelenkt wurde. In einer oberen Seite 31 des Korpus 11, die in der Regel durch das Trittbrett 10 abgedeckt wird, befindet sich eine Öffnung 32, die dazu dient, dass ein an der Unterseite des Trittbretts 10 befestigter Stößel mit dem Energiewandler 20 verbunden werden kann. Dabei erfolgt eine Verbindung vom Stößel zum Energiewandler 20, indem dieser auf der auslösebereiten Blattfeder 18 ruht.

Der Befestigungsabschnitt 12 ist als Schnellverschluss mit einem Bajonettverschluss ausgebildet, so dass der Sender 13 einfach an einer Stirnseite des Befestigungsabschnitts 12 befestigt werden kann. Der Befestigungsabschnitt 12 wird dabei mittels Presspassung in der Seitenwand 4 gehalten.

Fig. 6 zeigt die Auslöseeinrichtung 9 ohne Gehäuse 2. Das Trittbrett 10 der Auslöseeinrichtung 9 deckt dabei die obere Seite 31 des Korpus 11 vollständig ab und ist dachartig ausgebildet, so dass auch seitliche Flächen des Korpus 11 teilweise vom Trittbrett 10 abgedeckt sind. Ein Eindringen von Tieren durch die Öffnung 32 in den Korpus 11 wird damit zuverlässig verhindert.

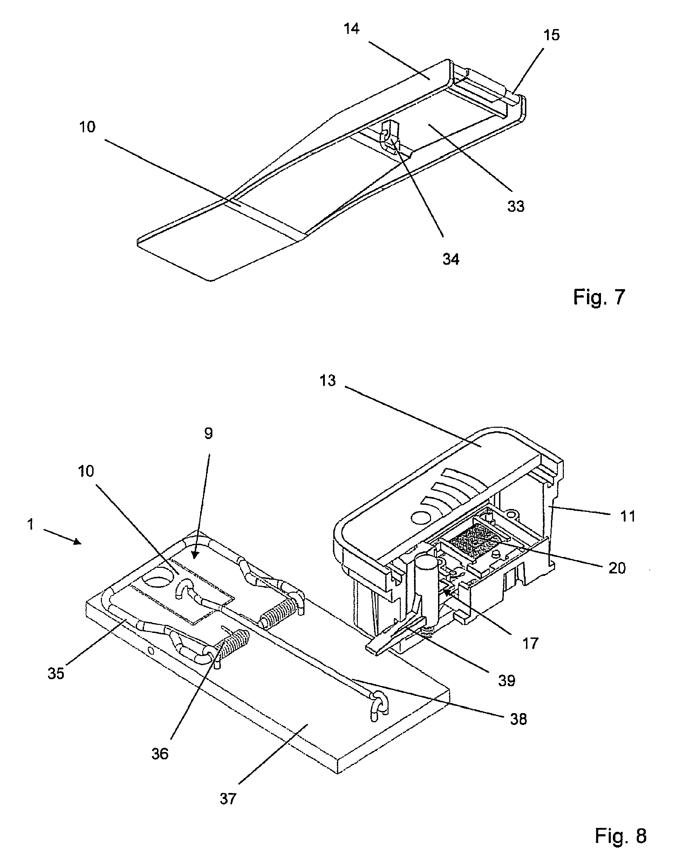

In Fig. 7 ist das Trittbrett 10 der Auslöseeinrichtung 9 vereinzelt dargestellt. An einer Unterseite 33 des Trittbretts 10 ist ein Stößel 34 angeordnet. Dieser ruht bei "scharfer Falle" auf der Blattfeder 18. Der Stößel ist von einer schwenkbaren Rechtecköse durchsetzt. Diese untergreift die Blattfeder 18. So lässt sich durch bloßes Anheben des Trittbretts 10 einer ausgelösten Falle der Energiewandler 20 wieder scharf machen.

Fig. 8 zeigt ein weiteres bevorzugtes Ausführungsbeispiel, wobei die Falle 1 nicht als Lebendfalle ausgebildet ist. Die Falle 1 weist einen Schlagarm 35 auf, der mit Hilfe einer Feder 36 vorgespannt werden kann. Der Schlagarm 35 und die Feder 36 sind dabei auf einem Holzbrett 37 befestigt. Der Aufbau einer derartigen Falle, die unter dem Namen Mausefalle bekannt ist, ist Stand der Technik.

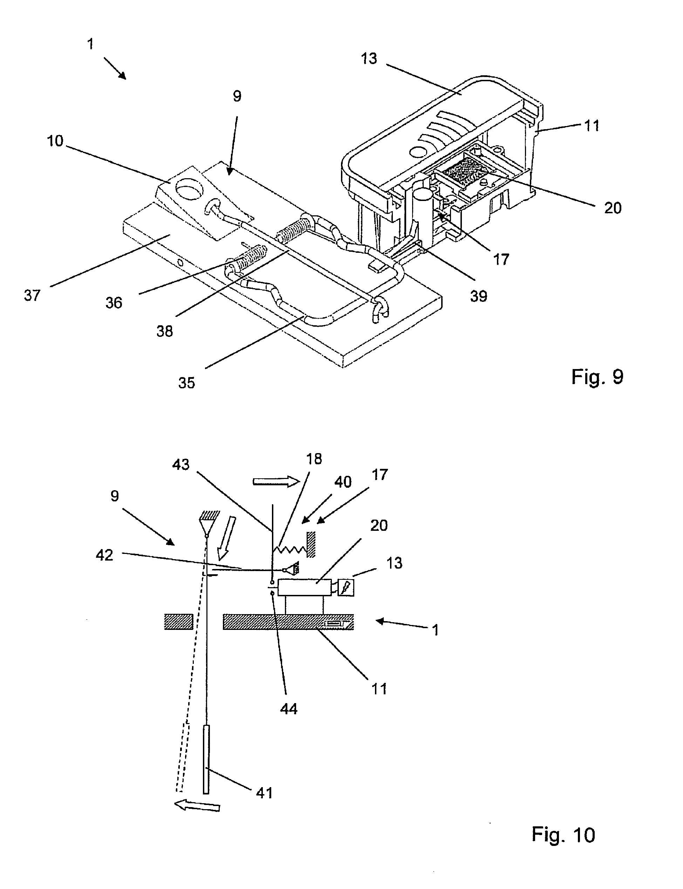

Das Trittbrett 10 der Auslöseeinrichtung 9 wird mit Hilfe einer Stange 38 in einer angehobenen Position gehalten, wenn die Falle 1 gespannt ist. Dies ist in Fig. 9 gezeigt. Dabei wird beim Spannen der Falle 1 und einer entsprechenden Bewegung des Schlagarms 35 die Vorspanneinrichtung 17 vorgespannt, in dem eine manuelle Bewegung des Schlagarms 35 über einen Kragarm 39 auf die Vorspanneinrichtung 17 übertragen wird. Beim Auslösen der Auslöseeinrichtung 9 wird der Kragarm 39 vom Schlagarm 35 freigegeben und löst damit die Vorspanneinrichtung 17, die die im Energiespeicher gespeicherte Energie freigibt und auf den Energiewandler 20 überträgt, der die mechanische Energie in entsprechende elektrische Energie umwandelt.

Der Korpus 11 ist bei den Fig. 8 und 9 nur der Anschaulichkeit halber offen dargestellt. Dabei ist im Korpus 11 auch der Sender 13 angeordnet. Der Korpus 11 kann dabei wasserdicht ausgebildet sein, so dass die Falle 1 problemlos im Freien verwendet werden kann.

Fig. 10 zeigt ein Funktionsschema der Auslöseeinrichtung 9 mit Energiespeicher 40 und Energiewandler 20. Die Auslöseeinrichtung 9 weist dabei ein Pendel 41 auf, das von einem Tier ausgelenkt werden kann. Die ausgelenkte Stellung des Pendels 41 ist gestrichelt dargestellt. Das Pendel 41 ist beispielsweise an einer nicht dargestellten Decke der Falle 1 gelagert. Bei Auslenkung des Pendels 41 wird über einen Hebelmechanismus 42 eine im Energiespeicher 40 vorgespannt angeordnete Feder 18 gelöst, wobei die dabei frei werdende Federkraft über einen Übertragungsarm 43 auf den Energiewandler 20 übertragen wird. Der Arm 43 kann dabei beispielsweise mit dem Spannstift 19 verbunden sein, wobei bei Betätigung des Spannstifts 19 die Feder 18 wieder vorgespannt wird. Im Energiewandler 20, der als Generator ausgebildet ist, wird die über den Arm 43 und über eine Blattfeder 44 in den Energiewandler 20 eingebrachte Energie in elektrische Energie umgewandelt und an einen Sender 13 übertragen.

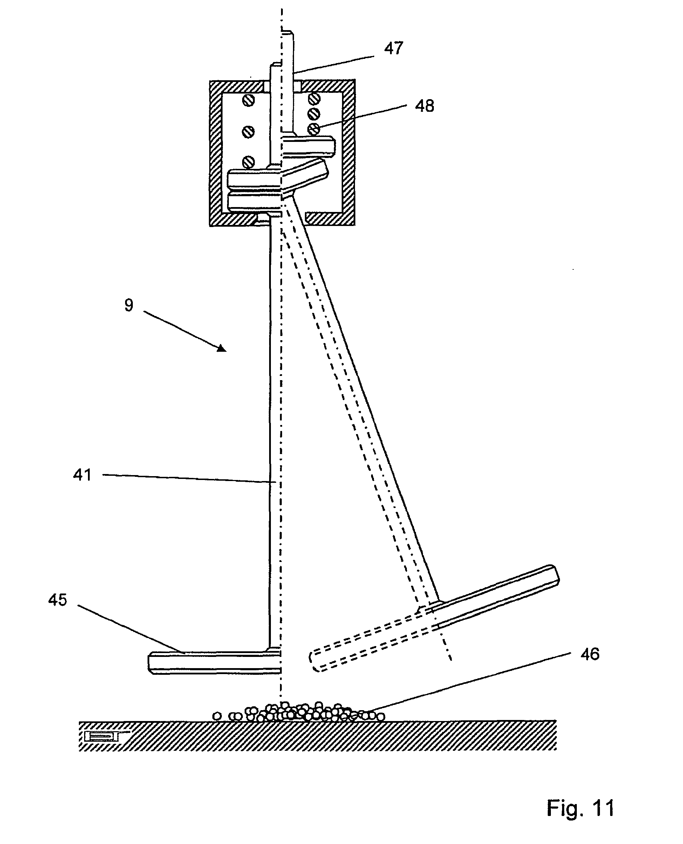

Fig. 11 zeigt eine Ausgestaltung des Pendels 41, wobei schematisch sowohl eine Ruhestellung als auch eine ausgelenkte Stellung des Pendels 41 gezeigt ist. Das Pendel weist an seinem unteren Ende eine Stoßscheibe 45 auf, die oberhalb eines Köders 46 platziert ist. Der Köder 46 findet sich beispielsweise am Boden der Falle 1. Durch die Bewegung des Pendels 41 wird ein Stößel 47 ausgelenkt, wobei die Bewegung des Stößels 47 auf den Energiewandler übertragen wird. Mit Hilfe einer Druckfeder 48 wird dabei eine Ruhelage des Pendels 41 definiert. Die Übertragung der Bewegung des Pendels 41 auf den Stößel 47 erfolgt dabei beispielsweise über Schwenkscheiben, die an den einander zugewandten Enden des Stößels 47 und des Pendels 41 angeordnet sind. Das Pendel 41 kann in einem Rohrgehäuse gelagert sein, wobei auch die Druckfeder 48 und die Schwenkscheiben im Rohrgehäuse angeordnet sind. Der Stößel durchragt dann eine Öffnung im Rohrgehäuse. Die Druckfeder 48 dient sowohl der Wiederherstellung der vertikalen Ruhelage des Pendels als auch des Schalzustandes des Funksenders: Die direkte Kopplung von Stößel 47 und Generatorenblattfeder 18/44 ermöglicht eine wartungsfreie Präsenzmeldeeinrichtung, die sich als einzige der hier dargestellten Ausführungsformen selbst wieder zurückstellt. Ein zusätzlicher Energiespeicher 18, wie in den übrigen Ausführungsbeispielen gezeigt, erfordert hingegen nach jedem "Tierbesuch" ein erneutes manuelle Spannen.

Die Einleitung der mechanischen Energie in die Blattfeder 18/44 des Energiewandlers 20 erfolgt entweder indirekt über einen auszulösenden Energiespeicher (Druckfeder 18) It. Fig. 9 und 10 oder direkt mittels Eigengewicht des Tieres, insbesondere Kleintieres nach Fig. 1 oder "Schubs" des Tieres nach Fig. 11. Eine Kombination des direkten mit dem indirekten Wirkprinzip ist zwar ebenfalls möglich, scheint aber unwirtschaftlich.

Die Falle ist zwar prinzipiell bei allen Landtieren einsetzbar, wird aber bevorzugt in Zusammenhang mit Kleintieren wie Nagetieren und ähnlichen Schädlingen eingesetzt.

### Bezugszeichen

- 1: Falle
- 2: Gehäuse
- 3: Deckel
- 4: Seitenwand
- 5: Eingang
- 6: Seitenwand
- 7: Öffnung
- 8: Innenraum
- 9: Auslöseeinrichtung
- 10: Trittbrett
- 11: Korpus
- 12: Befestigungsabschnitt
- 13: Funksender
- 14: Trittbrettende
- 15: Schwenkachse
- 16: Druckscheibe
- 17: Vorspanneinrichtung
- 18: Feder
- 19: Spannstift
- 20: Energiewandler
- 21: Schutzgehäuse
- 22: Öffnung
- 23: Öffnung
- 24: Befestigungspunkt
- 25: Befestigungspunkt
- 26: Rückwand
- 27: Belüftungsöffnungen
- 28: Aufnahme
- 29: Aufnahme
- 30: Hebel
- 31: Oberseite
- 32: Öffnung
- 33: Unterseite
- 34: Stößel
- 35: Schlagarm
- 36: Feder
- 37: Holzbrett
- 38: Stange
- 39: Kragarm
- 40: Energiespeicher
- 41: Pendel
- 42: Hebelmechanismus
- 43: Übertragungsarm
- 44: Blattfeder
- 45: Stoßscheibe
- 46: Köder
- 47: Stößel
- 48: Druckfeder
- 49: Kalibriervorrichtung

## Patentansprüche

1. Falle, insbesondere Kleintierfalle, die eine Auslöseeinrichtung und einen Sender zum Senden eines Auslösesignals aufweist, **dadurch gekennzeichnet, dass** sie einen Energiewandler (20) zum Umwandeln mechanischer Energie in elektrische Energie aufweist.

2. Falle nach Anspruch 1, **dadurch gekennzeichnet, dass** sie ein mechanisches Schnappelement aufweist, das zwischen Auslöseeinrichtung (9) und Energiewandler (20) angeordnet ist.

3. Falle nach Anspruch 2, **dadurch gekennzeichnet, dass** sie einen mechanischen Energiespeicher (40), und eine Vorspanneinrichtung (17) aufweist.

4. Falle nach Anspruch 3, **dadurch gekennzeichnet, dass** die Vorspanneinrichtung 17 durch Betätigung der Auslöseeinrichtung (9) lösbar ist, wodurch mechanische Energie aus dem Energiespeicher (40) auf den Energiewandler (20) übertragbar ist.

5. Falle nach einem der Ansprüche 1 bis 4, **dadurch gekennzeichnet, dass** die Auslöseeinrichtung (9) einen Schlagarm (35) aufweist, wobei durch Vorspannen des Schlagarms (35) die Vorspanneinrichtung (17) spannbar ist.

6. Falle nach einem der Ansprüche 1 bis 5, **dadurch gekennzeichnet, dass** die Auslöseeinrichtung (9) schwenkbar an einem Korpus (11) befestigt ist, in dem der Energiewandler (20) angeordnet ist.

7. Falle nach einem der Ansprüche 2 bis 6, **dadurch gekennzeichnet, dass** die Auslöseeinrichtung (9) einen Stößel (34, 47) aufweist, der durch eine Öffnung (32) im Korpus (11) mit dem Energiewandler (20) verbunden ist.

8. Falle nach einem der Ansprüche 1 bis 7, **dadurch gekennzeichnet, dass** die Auslöseeinrichtung (9) ein Pendel (41) oder eine Klappe aufweist.

9. Falle nach einem der Ansprüche 1 bis 7, **dadurch gekennzeichnet, dass** die Auslöseeinrichtung (9) ein Trittbrett (10) aufweist, das an einem Ende (14) schwenkbar am Korpus (11) gelagert ist.

10. Falle nach Anspruch 9, **dadurch gekennzeichnet, dass** an einer Schwenkachse (15) des Trittbretts (10) eine Druckscheibe (16) angeordnet ist.

11. Falle nach einem der Ansprüche 9 oder 10, **dadurch gekennzeichnet, dass** das Trittbrett (10) eine Seite (31) des Korpus (11) zumindest teilweise überdeckt.

12. Falle nach einem der Ansprüche 1 bis 11, **dadurch gekennzeichnet, dass** die Auslöseeinrichtung eine Kalibriervorrichtung (49) aufweist.

13. Falle nach einem der Ansprüche 1 bis 12, **dadurch gekennzeichnet, dass** sie ein Gehäuse (2) aufweist, wobei die Auslöseeinrichtung (9) innerhalb des Gehäuses (2) und der Sender (13) außerhalb des Gehäuses (2) angeordnet sind.

14. Falle nach Anspruch 13, **dadurch gekennzeichnet, dass** der Korpus (11) einen Befestigungsabschnitt (12) für den Sender (13) aufweist, wobei der Befestigungsabschnitt (12) durch eine Wand (4) des Gehäuses (2) geführt ist.

15. Falle nach Anspruch 14, **dadurch gekennzeichnet, dass** in den Befestigungsabschnitt (12) elektrische Kontakte integriert sind.

16. Falle nach einem der Ansprüche 10 bis 15, **dadurch gekennzeichnet, dass** die Druckscheibe (16) mit einem Nocken in Umfangsrichtung auf der Blattfeder (18/44) des Energiewandlers (20) ruht und bei Belastung des Trittbretts (10) durch das Eigengewicht eines Tiers schlagartig nachgibt und dadurch am vorzugsweise elektrodynamisch wirkenden Energiewandler (20) einen Spannungsimpuls induziert, der zur Abstrahlung eines Funktelegramms verwertet wird.
